(19) Europäisches Patentamt / European Patent Office / Office européen des brevets

(11) **EP 4 014 718 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **20215479.5**

(22) Anmeldetag: **18.12.2020**

(51) Internationale Patentklassifikation (IPC):
*A01G 13/02* (2006.01)   *A01G 13/04* (2006.01)
*A47G 33/04* (2006.01)

(52) Gemeinsame Patentklassifikation (CPC):
**A01G 13/22; A01G 13/262; A01G 13/264; A47G 33/045;** B65F 2240/124

(54) **HÜLLSYSTEM FÜR EINEN BAUM**

ENCAPSULATION SYSTEM FOR A TREE

SYSTÈME D'ENVELOPPEMENT POUR UN ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2022 Patentblatt 2022/25**

(73) Patentinhaber: **Suckau, Lennart**
**14169 Berlin (DE)**

(72) Erfinder: **Suckau, Lennart**
**14169 Berlin (DE)**

(74) Vertreter: **Hertin und Partner**
**Rechts- und Patentanwälte PartG mbB**
**Kurfürstendamm 63**
**10707 Berlin (DE)**

(56) Entgegenhaltungen:
DE-U- 7 524 965    DE-U1- 29 717 614
GB-A- 2 364 988    US-A- 2 911 025
US-A- 4 054 166

**Beschreibung**

Die Erfindung betrifft ein Hüllsystem für einen Baum, welches zwei lösbar miteinander verbundene biegeschlaffe Flächenelemente aufweist. Ein erstes Flächenelement ist als eine Grundfläche und ein zweites Flächenelement ist als eine Mantelfläche ausgestaltet. Dies ermöglicht das Herbeiführen einer verschlossenen Hülle, die in ihrem Inneren einen Teilbereich eines Baumes aufnehmen kann. Weiterhin weist die Grundfläche eine Öffnung auf.

Darüber hinaus betrifft die Erfindung die Verwendung des Hüllsystems als Transporthilfe für einen Baum und/oder als Schutz gegen Frost für einen Baum.

Hintergrund und Stand der Technik

Üblicherweise sind Weihnachtsbäume geschmückte Nadelbäume, die während der Weihnachtszeit in einem Gebäude oder im Freien aufgestellt werden. Die nadelfreie Entsorgung aufgestellter Weihnachtsbäume ist zum Ende einer jeder Weihnachtszeit ein bekanntes Problem. Aufgrund der teilweise längeren Standzeit in geschlossenen und beheizten Räumen, verliert ein Baum Wasser, wodurch sich seine Nadeln lösen und zu Boden fallen. Insbesondere beim Abschmücken des Baumes sowie auch beim Transport von einem Innenraum in einen Außenbereich ist der Nadelverlust erheblich. Als Folge können sich die Nadeln in einem gesamten Haus und/oder einer Wohnung verteilen - so zum Beispiel im Hausflur, Wohnzimmer etc. Die verteilten Nadeln lassen sich dabei nur mit großem Aufwand aufsammeln und entsorgen. Vor allem auf Teppichböden verhaken sich die Nadeln in den Teppichfasern, dass selbst eine eingesetzte Saugvorrichtung (Staubsauger) die Aufräumarbeit nicht erleichtern kann.

Im Stand der Technik sind Entsorgungsverpackungen für Weihnachtsbäume bekannt. Bei diesen Entsorgungsverpackungen handelt es sich überwiegend um einteilige, schlauchförmige Hüllensysteme, die entweder von einer Unterseite oder von einer Oberseite angelegt und dann um den jeweiligen Baum gezogen werden sollen.

Eine derartige Entsorgungsverpackung ist zum Beispiel aus der Druckschrift GB 2 282 587 A bekannt, wobei die Schlauchenden der dort offenbarten Entsorgungsverpackung jeweils ein Gummiband aufweisen. Die Enden lassen sich dadurch an der Baumkrone und am Baumstamm zusammenziehen, wodurch die Nadeln des Baumes nicht aus der Hülle austreten sollen.

Ein Nachteil dieser Konstruktionen ist, dass diese nicht von einer einzelnen Person an einen stehenden Baum angelegt werden können. Einerseits sind als Weihnachtsbaum verwendete Nadelbäume nämlich häufig in ihrem Gesamtdurchmesser zu breit und andererseits sind sie zu hoch, sodass das schlauchförmige Hüllensystem oben an der Baumspitze nicht ohne weitere Hilfsmittel (Leiter, Tritt, zweite Person, etc.) verschlossen und/oder übergestülpt werden kann.

Weiterhin unterliegt der Baum gerade beim Anbringen der bekannten Entsorgungsverpackungen einer physischen Berührung, wodurch der Baum durch "Rütteln", "Verbiegen" und/oder einfachem "Abstreifen" besonders große Mengen an Nadeln verliert. Diese Nadeln werden beim Anbringen der bekannten Entsorgungsverpackungen in keiner Weise aufgefangen, sondern fallen auf einen Boden. Um dem entgegen zu wirken ist zwar in der GB 2 282 587 A ein Verfahren beschrieben, die Entsorgungshülle ausgehend von der Unterseite eines Baumes bis hin zur Baumspitze anzulegen, wobei die Entsorgungshülle nach dem Fixieren am Stamm zunächst unterhalb des Baumes für einen Nadelauffang ausgebreitet wird (vgl. Fig.3 der GB 2 282 587 A). Allerdings muss in diesem Fall nachteilig der gesamte Baum (samt Aufständerung) angehoben werden, damit die Entsorgungsverpackung im unteren Bereich des Baumes am Stamm fixiert werden kann.

Die US 4 054 166 A offenbart eine Christbaumhülle. Dabei ist die Christbaumhülle als ein flexibles folienartiges Material ausgestaltet, das um einen Baum gewickelt wird, wobei sich überlappende Ränder über Druckknöpfe verschließen lassen. Ferner umfasst die Christbaumhülle ein mit einem Reisverschluss versehendes Bodenteil, welches dazu eingerichtet ist, die Christbaumhülle auf einer Unterseite zu verschließen. Des Weiteren weist die offenbarte Christbaumhülle Bänder bzw. Riemen auf, die durch Schlaufen geführt werden und insbesondere ein Festzurren des oberen und unteren Randbereiches der Christbaumhülle ermöglichen. Die Christbaumhülle weist zudem zusätzlich Tragegriffe auf.

Die US 2 911 025 A betrifft eine zweiteilige Hülle bzw. Abdeckung für einen Christbaum. Ein erster Teil der Abdeckung ist als eine Mantelfläche ausgestaltet, während ein zweiter Teil der Abdeckung als eine Bodenfläche ausgestaltet ist. Beide Teile sind dabei aus einem flexiblen Material hergestellt, zum Beispiel: Baumwolle, Nylon, Kunststoff oder Papier. Die Bodenfläche ist vorzugsweise kreisförmig und hat einerseits eine dekorative Funktion und andererseits eine technische Funktion, nämlich das Auffangen von herabfallenden Nadeln. Die Mantelfläche ist hingegen bevorzugt konisch ausgestaltet. Die Bodenfläche kann durch Knopfverschlüsse mit der Mantelfläche verbunden werden. Außerdem weist die Mantelfläche entlang ihrer Mittellinie einen Öffnungs- und Schließeinschnitt auf.

Die DE 297 17 614 U1 offenbart eine Transporthülle für Weihnachtsbäume. Die Transporthülle besteht aus einem zylindrischen Kegel als Hüllenoberteil sowie einem kreisflächenförmigen Unterteil. An dem Hüllenoberteil ist in etwa halber Kegelhöhe ein Griffschlauch ausgebildet. Das Hüllenunterteil besitzt in der Mitte einen Kreisausschnitt, welches mit einem Raffband versehen ist. Sowohl Hüllenoberteil als auch Hüllenunterteil sind aus einem gemeinsamen folienartigen Gebilde zusammengesetzt und bereichsweise fest (unlöslich) miteinander verbunden.

Eine für eine Person einfache nadelfreie Entsorgung von Weihnachtsbäumen ist mit den aus dem Stand der Technik bekannten Systemen nicht möglich.

Aufgabe der Erfindung

Aufgabe der vorliegenden Erfindung war es, die Nachteile des Standes der Technik zu beseitigen und ein verbessertes Hüllsystem bereitzustellen, welches sich durch eine Person um einen Baum anlegen lässt sowie eine nadelfreie Entsorgung des Baumes ermöglicht oder zumindest die Menge von auf einen Boden aufkommenden Nadeln minimiert.

Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Hüllsystem für einen Baum, dadurch gekennzeichnet, dass das Hüllsystem zwei lösbar miteinander verbundene biegeschlaffe Flächenelemente aufweist, wobei ein erstes Flächenelement als eine Grundfläche und ein zweites Flächenelement als eine Mantelfläche ausgestaltet ist, sodass beide Flächenelemente durch ihre Verbindung eine verschlossene Hülle herbei führen, welche in ihrem inneren einen Teilbereich eines Baumes aufnehmen kann, wobei die Grundfläche eine Öffnung aufweist.

Bevorzugt ist das erfindungsgemäße Hüllsystem dazu eingerichtet einen Baum bzw. einen Teilbereich eines Baumes zu umhüllen und zum einen die Umgebung durch sich lösende Nadeln, Äste und/oder Blätter zu schützen und zum anderen einen vereinfachten Transport des Baumes zu ermöglichen. Das bevorzugte Hüllsystem ist aufgrund der Konstruktionsweise vorteilhaft sehr einfach in der Handhabung und eignet sich überaus gut, um um einen Baum angelegt zu werden. Insbesondere die Ausgestaltung des Hüllsystems in zwei separate Flächenelemente, welche lösbar miteinander verbunden werden, ist dabei als eine wesentliche Abkehr zum Stand der Technik anzusehen, denn bekannte Hüllsysteme umfassen üblicherweise - wie eingangs erläutert - ausschließlich ein Flächenelement und eine schlauchförmige Ausgestaltung.

Es ist ein besonderer Vorteil, dass beide Flächenelemente reversibel voneinander gelöst und verbunden werden können. Somit können die Flächenelemente voneinander separiert und jeweils für einen anderen Anwendungszweck verwendet und problemlos gelagert und verstaut werden. Die zweiteilige Form ermöglicht gerade im Vergleich zu Hüllsystemen aus dem Stand der Technik eine erweiterte Anwendungsmöglichkeit, und zwar kann die Grundfläche während der gesamten Standzeit eines Weihnachtsbaumes an seinem Stamm angeordnet vorliegen und zum Beispiel als ein Dekorationselement oder eine Auffangfläche für herunterfallende Nadeln, Blätter und/oder Äste dienen, während die Mantelfläche separiert gelagert und verstaut werden kann. Die Grundfläche weist dabei bevorzugt eine Öffnung auf, die den Baumstamm in sich aufnehmen kann und weist darüber hinaus bevorzugt eine abweisende Oberfläche auf, welche ein simples Entfernen von Nadeln, Blätter und/oder Äste bspw. durch einen Handfeger ermöglicht.

Sobald der Baum bewegt bzw. transportiert werden soll, wird die Mantelfläche bevorzugt um die Baumkrone umgelegt bzw. übergestülpt. Alternativ kann die Mantelfläche übergeworfen werden, wobei anschließend die Mantelfläche korrekt ausgerichtet und/oder platziert wird. Während des Ausrichtens der Mantelfläche um den Baum lässt es sich nicht vermeiden, dass sich Nadeln/ Blätter und/oder Äste lösen. Daher wird bevorzugt die Grundfläche in einem ersten Schritt - vor dem Überstülpen der Mantelfläche - an der Unterseite des Baumes platziert (oder die Grundfläche liegt schon aufgrund einer Dekoration schon unterhalb des Baums vor). Sich lösende Nadeln können somit vorteilhaft auf die Grundfläche fallen. Auf der Grundfläche befindliche Nadeln können einerseits in einfacher Weise von der Grundfläche entfernt oder aber andererseits auf der Grundfläche belassen werden, während die Grundfläche entlang des Baumstammes von einer unteren (bevorzugt auf dem Boden) befindlichen Position in eine weitere Position geführt werden kann, in welcher sie mit der Mantelfläche verbunden wird, sodass die Nadeln mit im Hüllsystem eingeschlossen werden. In anderen Worten können die Nadeln, Blätter und/oder Äste weiterhin auf der Grundfläche vorliegen und nach dem Verbinden beider Elemente in das Innere einer Hülle eingebracht werden. Anschließend kann der Baum in vorteilhafter Weise abtransportiert werden, ohne weiter Nadeln zu verlieren.

Die Kombination der vorliegenden Erfindungsmerkmale führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Es ist auch ein großer Vorteil darin zu sehen, dass die bevorzugte Hülle eine hohe Lebensdauer aufweist. Das Material des Hüllsystems, insbesondere der Flächenelemente, wird nämlich durch das Aufweisen von zwei Teilen nicht in der Weise beim Anlegen strapaziert, wie vergleichsweise bei bekannte Hüllen, die ausschließlich ein Flächenelement aufweisen. Ferner ist das Aufweisen mehrerer Flächenelemente dahingehend vorteilhaft, dass bei einem Schaden nicht das gesamte System ausgetauscht werden muss, sondern ausschließlich das beschädigte Element. Auch in der Herstellung des erfindungsgemäßen Hüllsystems ist es vorteilhaft, dass kleiner dimensionierte Maschinen mit einem geringeren Stromverbrauch genutzt werden können, da die einzelnen Flächenelemente (Grundfläche und Mantelfläche) nicht die Größe annehmen, wie ein Einzelflächenelement eines aus dem Stand der Technik bekannten schlauchförmigen Hüllsystems.

Im Sinne der Erfindung ist ein Flächenelement bevorzugt ein dreidimensionaler Gegenstand, welcher in seiner Breite und/oder Länge sehr viel größer ist als seine Dicke. In einer bevorzugten Ausgestaltung der Flächenelemente weisen diese eine Dicke von bevorzugt von 1 $\mu$m bis zu 10 mm auf, stärker bevorzugt von 5 $\mu$m bis zu 5 mm, besonders stark bevorzugt 10 $\mu$m bis 2 mm und insbesondere 20 $\mu$m bis 1 mm. Die beschriebenen Dicken der Flächenelemente ermöglichen es, geringe Materialmengen zu verwenden, wobei eine ausreichende Festigkeit gegeben ist, sodass aufkommende Schäden minimiert werden. Das bevorzugte Hüllsystem umfasst besonders bevorzugt biegeschlaffe Flächenelemente. Dies hat den Vorteil, dass die Flächenelemente sehr gut um einen Baum schmiegen können, wodurch sich die Transportierbarkeit erleichtert. Die Flexibilität der Flächenelemente ermöglicht vor allem auch eine sehr gute Transportierbarkeit durch Engstellen, wie bspw. Türen. Weiterhin lassen sich die biegeschlaffen Flächenelemente im Nichtgebrauchsfall in besonders vorteilhafter Weise Einrollen bzw. Verpacken, sodass diese ein nur geringes Volumen aufweisen. Die biegeschlaffen Flächenelemente sind bevorzugt aufgrund ihrer geringen Dicke und der großen Flexibilität auch als eine "Hüllhaut" zu verstehen.

In einer weiteren bevorzugten Ausführungsform ist die Mantelfläche und/oder die Grundfläche aus einer Vielzahl von Einzelelementen ausgestaltetet, wobei die Einzelelemente als kleinere Flächenelemente (Einzelflächenelemente) zu verstehen sind. Die einzelnen Flächenelemente können über eine Naht (oder mehrere Nähte) miteinander zu einem Gesamtflächenelement, nämlich einer Mantelfläche und/oder einer Grundfläche, verbunden werden. Eine derartige "modulare" Ausgestaltung der Mantel- und/oder Grundfläche führt vorteilhaft dazu, dass die Herstellungsmaschinen noch kompakter - ohne großen Arbeitsbereich - dimensioniert werden können. Ferner ermöglicht die Art der Ausgestaltung recycelte Flächenelemente (wie Kleidung, die zur Entsorgung gedacht sind oder anderweitige Recyclingmaterialien, wie recyceltes Kunststoff und/oder zur Entsorgung gedachte Zeltplanen und/oder Fischernetze ) zu verwenden. Recycling schont die Umwelt in vielerlei Hinsicht. Es hilft, Müllberge zu vermeiden. Es hilft, den Ausstoß schädlicher Treibhausgase zu reduzieren. Und es hilft, Energie zu sparen. Die Energie, die bei der Wiederaufbereitung eines Wertstoffs investiert wird, ist oft nur ein Bruchteil der Energie, die bei der Neuerzeugung vonnöten ist.

Es ist auch bevorzugt, dass die Mantel- und/oder Grundfläche mehrere Lagen bzw. Schichten von Flächenelementen aufweisen. Dabei kann auch besonders bevorzugt sein, dass nur Teilbereiche der Flächenelemente (Mantel- und/oder Grundfläche) mehrlagig verstärkt werden. So kann zum Beispiel die Innenseite der Kegel- bzw. Mantelspitze durch eine zweite Lage des Mantelflächenmaterials über eine Länge von ca. 20cm - 30cm verstärkt werden, um so eine vorteilhafte stabilere Öffnung beim Überziehen des Oberteils über den Baum zu ermöglichen. Darüber hinaus ermöglicht das Aufweisen von mehreren Lagen in der Kegelspitze eine höhere Lebensdauer des Hüllsystems und das Auftreten verminderter Verschleißerscheinungen, denn durch die mehreren Lagen wird ein Durchstechen der Baumspitze durch das Material erschwert. Insbesondere Weihnachtsbäume weisen häufig eine abgeschnittene/gekürzte Baumspitze auf, mit der Absicht einen Baumschmuck (Stern, Spitze, etc.) anbringen zu können, wobei vor allem diese Gegebenheit, die angespitzte Baumspitze, zu einem simplen Durchdringen durch ein zu dünn ausgestaltetes Material führt. In alternativen Ausführungsformen können die jeweiligen Lagen aus unterschiedlichen Materialien gefertigt sein. So kann die äußere Lage eines Flächenelementes aus umweltschonenden Naturfasern bestehen und Teilbereiche der Innenseite mit einer Lage aus synthetischen hochfesten Fasern ausgestaltet sein.

In einer weiteren bevorzugten Ausführungsform ist das Hüllsystem dadurch gekennzeichnet, dass die Flächenelemente ein Flächengewicht von bevorzugt 20 g/m$^2$- 400 g/m$^2$, stärker bevorzugt 40 g/m$^2$ - 300 g/m$^2$ und insbesondere 60 g/m$^2$ - 200 g/m$^2$ aufweisen. Aufgrund dieser Wertbereiche weisen die Flächenelement vorteilhaft eine leichte aber trotzdem sehr strapazierbare Ausgestaltung auf.

Grundsätzlich wird als Mantelfläche oder kurz Mantel ein Teil der Oberfläche bestimmter Körper bezeichnet. Vorliegend nimmt das Hüllsystem in seiner Gesamtheit, also wenn die beiden Flächenelemente miteinander verbunden sind, in einem aufgespannten Zustand eine Körperform an. Das zweite Flächenelement ist dabei bevorzugt als Mantelfläche dieser Körperform zu bezeichnen.

Es versteht sich, das mit der Begriffsfolge "verschlossene Hülle" kein luftdichter Verschluss gemeint ist. Die "verschlossene Hülle" ist so zu verstehen, dass beide Flächenelemente miteinander lösbar verbunden sind, wobei die Hülle dabei keine Nadeln, Äste, und oder Blätter aus einem Innenraum der Hülle in einen Bereich außerhalb der Hülle gelangen kann. Es ist demnach als ein geschlossenes und nadelundurchlässiges System zu verstehen. Insbesondere ist die verschlossene Hülle teilweise durch die Öffnung der Grundfläche geöffnet, also nicht komplett verschlossen. Die Öffnung ist bevorzugt dazu eingerichtet, dass der Baumstamm in diese aufgenommen werden kann, sodass der Baumstamm unter anderem als eine Führung dient.

Das Hüllsystem kann dabei einen Teilbereich eines Baumes in sich aufnehmen, wobei der Teilbereich bevorzugt der Wipfel und/oder die Baumkrone und/oder die Verästelung und/oder Blätter und/oder Nadeln beschreibt.

Im Sinne der Erfindung ist ein Baum bevorzugt ausgesucht aus der Gruppe Fichte, Kiefer, Rotbuche, Eiche, Lärche, Tanne, Hainbuche, Linde, Birke, Pappel und Weide, Spitz-, Berg- und Feldahorn, Esche, Ulme, Schwarzerle. Besonders stark bevorzugt ist der Baum ein Nadelbaum, nämlich ausgesucht aus der Gruppe Fichte, Tanne, Kiefer, Lärche, Zirbe, Eibe, Wacholder, Zeder. Insbesondere ist der Baum als ein sog. Weihnachtsbaum ausgestaltet und ausgesucht aus der Gruppe umfassend Nordmanntanne, Fichte, Rotfichte, Edeltanne / Nobilistanne, Kiefer, Douglasie, Colorado-Tanne.

In einer weiteren bevorzugten Ausführungsform ist das Hüllsystem dadurch gekennzeichnet, dass die Grundfläche und die Mantelfläche über ein Verbindungsmittel reversibel miteinander verbindbar sind und in der Verbindungsstelle eine Stoßkante bilden und die Öffnung im Zentrum der Grundfläche positioniert ist. Dadurch, dass die Öffnung im Zentrum der Grundfläche positioniert ist, kann das Hüllsystem vorteilhaft gleichmäßig um den Baum angebracht werden. Dies führt vorteilhaft dazu, dass die Grundfläche von allen Seiten gleichgut erreichbar ist und von allen Seiten entlang des Baumstammes von einer unteren Position - anliegend auf einem Boden - in eine obere Position geführt werden kann. Zudem gehen mit einer im Zentrum der Grundfläche positionierte Öffnung ästhetische Vorteile einher, welche ein gleichmäßiges und geordnetes Erscheinungsbild der Weihnachtsbaumes ermöglichen, sofern die Grundfläche als Dekorationselement verwendet wird. Zudem sind im Hüllsystem umfasste Verbindungsmittel, die reversibel die Grundfläche und Mantelfläche miteinander verbinden als umweltfreundlich anzusehen, da diese Verbindungen auf eine stoffschlüssige Verbindung verzichten und demnach auch umweltschädliche Chemikalien nicht verwenden.

Die Verbindungsstelle bzw. die Stoßkante ist bevorzugt besonders stabil ausgestaltet, da bei einem Transport eine hohe Belastung auf dieser einwirken kann. Um die Kanten zusätzlich zu stabilisieren und/oder zu schützen eignet sich bspw. ein Verstärkungselement wie ein Draht, ein Stab oder eine ähnliche Vorrichtung. Das Verstärkungselement verteilt vorteilhaft bevorzugt den Kantendruck gleichmäßig und schützt die Stoßkante vor Beschädigungen.

In einer weiteren bevorzugten Ausführungsform ist das Hüllsystem dadurch gekennzeichnet, dass die verschlossene Hülle in einem aufgespannten Zustand die Form eines Kegels annimmt,

- wobei die Grundfläche eine Kreisform aufweist;

- wobei die Mantelfläche entlang einer Mantellinie einen Einschnitt mit einem Verbindungsmittel aufweist, welcher dazu eingerichtet ist, die Mantelfläche zu öffnen, sodass diese eine abgewickelte Form annehmen kann;

- wobei die abgewickelte Form der Mantelfläche einen Kreissektor bildet.

Da das bevorzugte Hüllsystem in einem aufgespannten Zustand die Form eines Kegels annimmt, können insbesondere Nadelbäume vorteilhaft in das Hüllsystem aufgenommen werden, weil diese durch ihre natürliche Form ausgehend von einem Wipfel in Bodenrichtung breitere Ausgestaltung aufweisen und sich sehr gut an die Innenflächen der Hülle anschmiegen können. Auch das Anlegen der Mantelfläche sowie die anschließende Ausrichtung dieser ist durch eine Kegelform vorteilhaft vereinfacht umzusetzen.

Darüber hinaus weist der Einschnitt in der Mantelfläche einen enormen Vorteil gegenüber Ausgestaltungen aus dem Stand der Technik auf, denn dieser vereinfacht das Anbringen und auch das Abnehmen der Mantelfläche bzw. des Hüllsystems bei einem aufgeständerten (bzw. stehenden) Baum wesentlich. Statt - wie bisher im Stand der Technik üblich - eines Überstülpens/Überziehens eines Schlauches unter einem hohen Kraft- und Bewegungseinsatz für die Umhüllung eines Baumes, ermöglicht der bevorzugte Einschnitt die Mantelfläche zu öffnen, über den Baum umzulegen und ähnlich wie eine Jacke (oder ein Mantel) nach dem Ausrichten zu schließen. Dies kann ohne Kraftanstrengungen von einer Person bewerkstelligt werden. Auch das Abnehmen des Hüllsystems wird wesentlich vereinfacht. Üblicherweise wird der Baum im Außenbereich für die Entsorgung nicht aufgeständert, sondern auf einen Boden abgelegt. Entgegen den Ausführungen aus dem Stand der Technik, kann der Baum nach einem einfachen Öffnen des Einschnittes aus dem Hüllsystem herausgezogen werden.

Die Verbindung der Flächenelemente gestaltet sich bevorzugt so, dass die Mantelfläche und die Grundfläche komplementär zueinander sind und sich zu einer Körperform ergänzen lassen. Es ist dabei bevorzugt vorgesehen, dass der volle Umfang der Grundfläche eine Verbindung mit der Mantelfläche steht. Mit der Kegelform des aufgespannten Hüllsystems geht die kreisförmige Ausgestaltung der Grundfläche einher, wobei diese neben der Funktion als Auffangelement für Nadeln weiterhin aus ästhetischen Gründen vorteilhaft zu dekorativen Zwecken angewendet werden kann.

Im Sinne der Erfindung ist ein aufgespanner Zustand bevorzugt der Zustand des Hüllsystems in seiner größten Ausdehnung. Abwickelbare Flächen sind insbesondere aus der Geometrie und/oder dem technischen Zeichnen bekannt. Unter der Abwicklung einer Fläche versteht man in der Geometrie die Ausbreitung einer Fläche in eine Ebene, so dass Längen (gemessen auf der Originalfläche) erhalten bleiben. Die abgewickelte Form der Mantelfläche nimmt bevorzugt einen Kreissektor an, wobei der Kreissektor eine Teilfläche einer Kreisfläche ist, die von einem Kreisbogen und zwei Kreisradien begrenzt wird. Von oben betrachtet sieht diese Teilfläche abstrahiert bevorzugt aus wie ein angeschnittenes Tortenstück.

In einer bevorzugten Ausführungsform ist der Einschnitt nicht durchgängig entlang einer Mantellinie von der Stoßkante (Grundfläche / Mantelfläche) bis zu Kegelspitze ausgestaltet. Bevorzugt ist der Einschnitt entlang einer Mantellinie ausgehend von der Stoßkante bis zu einem oberen Bereich des Kegels ausgestaltet. Der obere Bereich kann dabei einen Abstand von bevorzugt bis zu 0,5 m, stärker bevorzugt bis 0,3 m und besonders stark bevorzugt bis zu 0,15m zur Kegelspitze aufweisen. Dies führt dazu, dass sich ein Zipfel beim Öffnen der Mantelfläche an der Kegelspitze bildet, welcher in vorteilhafter Weise in eine Baumkrone (Baumwipfel) eingehängt werden kann, sodass sich das Ausrichten der Mantelfläche vereinfacht.

Erfindungsgemäß ist das Hüllsystem dadurch gekennzeichnet, dass die Mantelfläche eine Stabvorrichtung entlang einer Mantellinie aufweist, wobei die Stabvorrichtung bevorzugt aus Holz, Metall und/oder Kunststoff gefertigt ist. Die Stabvorrichtung führt dazu, dass das Hüllsystem vereinfacht um einen Baum angelegt werden kann, da die Stabvorrichtung der Mantelfläche zumindest in einem Teilbereich eine ausreichende Steifigkeit verleiht und eine stützende Funktion einnimmt, welche es ermöglicht die Mantelfläche ausgehende einer Unterseite der Mantelfläche zu heben, in die Höhe zu strecken und/oder zu führen und um ein Wipfel des Baumes zu legen. Dies kann vorteilhafter Weise schon durch eine Person bewerkstelligt werden, wobei keine Hilfsmittel und/oder Hilfe weiterer Personen notwendig sind.

Der Vorteil von einer Stabvorrichtung aus Holz ist z.B. in der hohen Umweltverträglichkeit zu sehen. Zum einen handelt es sich dabei um einen nachwachsenden Rohstoff und zum anderen ist Holz in der Entsorgung biologisch abbaubar. Weiterhin weist Holz eine vorteilhaft hohe Stabilität und eine hohe Steifigkeit mit einem niedrigen Gewicht auf.

Die bevorzugte Ausgestaltung der Stabvorrichtung aus Kunststoff weist vorteilhaft eine hohe Wirtschaftlichkeit in der Herstellung auf. Weiterhin ermöglicht Kunststoff eine sehr leichte Ausgestaltung der Stabvorrichtung, wobei trotzdem eine ausreichende Steifigkeit erhalten werden kann.

Eine Stabvorrichtung aus Metall weist hingegen vorteilhaft eine sehr hohe Lebensdauer auf. Darüber hinaus kann sie hohen Belastungen aushalten und weist eine sehr hohe Steifigkeit aus. Aus diesem Grunde sind Stabvorrichtungen aus Metall besonders für hohe und schwere Bäume geeignet, die durch ein großes Hüllsystem umhüllt werden und die Stabvorrichtung eine entsprechend großen Mantelfläche tragen muss.

In einer weiteren bevorzugten Ausführungsform umfasst die oben genannte Stabvorrichtung eine der oben genannten Werkstoffe (Holz/Metall/Kunststoff). Weiterhin sind auch Verbundstoffe bevorzugt, wobei der Verbund eine Kombination oben genannten Werkstoffe sein kann und/oder ebenfalls Faserverstärkungen aufweist. Die Faserverstärkung ist bevorzugt aus Glasfaser, Aramid und/oder Carbon. Besonders bevorzugt sind Faserverstärkungen für eine Stabvorrichtung aus Kunststoff geeignet.

In einer weiteren bevorzugten Ausführungsform ist das Hüllsystem dadurch gekennzeichnet, dass sowohl die Grundfläche als auch die Mantelfläche jeweils eine innenliegende in die verschlossene Hülle gerichtete Seite und eine nach außen gerichtete Seite aufweisen, wobei die nach außen und/oder die nach innen gerichtete Seite der Mantelfläche entlang einer Mantellinie mindestens einen Führungskanal aufweist, welcher dazu eingerichtet ist, eine Stabvorrichtung aufzunehmen. Der Führungskanal dient besonders vorteilhaft zur Fixierung und Führung der Stabvorrichtung. Die Stabvorrichtung ist dabei bevorzugt in einem Freiheitsgrad in der Mantelfläche gelagert, sodass die Stabvorrichtung in den Kanal eingeschoben und herausgezogen werden kann, ohne seitlich auszuweichen. Entsprechend wird gewährleistet, dass die Mantelfläche an der Stabvorrichtung befestigt ist und ein erleichtertes Überstülpen der Mantelfläche über die Baumkrone erfolgen kann.

Bevorzugt kann vorgesehen sein, dass sich der Kanal aus mehreren kleineren Kanälen ausgestaltet, welche voneinander beabstandet sind und in einer Reihe angeordnet vorliegen. Im Zusammenwirken bilden sie einen Gesamtkanal, was vorteilhaft zu einer Einsparung von aufzuwendenden Material für die Ausgestaltung eines Kanals zu Folge hat.

In einer weiteren bevorzugten Ausführungsform kann auch die Grundfläche einen Führungskanal aufweisen, der dazu konfiguriert ist, eine Stabvorrichtung in sich aufzunehmen. Dies führt zu einer Stützung der Grundfläche, wodurch die Grundfläche vereinfacht von einer unteren auf dem Boden angesiedelten Position in eine obere Position zur Verbindung mit der Mantelfläche bewegt werden kann. Insbesondere kann eine Person die Grundfläche an einer Seite anfassen und den Bewegungsvorgang mit einer Hand durchführen.

In einer weiteren bevorzugten Ausführungsform ist das Hüllsystem dadurch gekennzeichnet, dass die Stabvorrichtung mindestens zwei Stabeinzelelemente umfasst, die sich über einen Adapter miteinander reversibel verbinden lassen und/oder sich teleskopartig ineinander und/oder auseinander fügen lassen. Der wesentliche Vorteil einer derartigen Ausgestaltung der Stabvorrichtung ist darin zu sehen, dass diese zwei Formzustände annehmen kann, wobei einer der beiden Zustände ein sehr geringe Längsausdehnung annimmt. Trotz der Formzustandsänderung müssen dabei keine Einbußen im Hinblick auf die Steifigkeit und/oder Stabilität hingenommen werden. Weiterhin kann die Stabvorrichtung erweitert werden und an eine beliebige Größe eines Baumes angepasst werden. Vorteilhaft ist weiterhin die durch die Zusammensetzung umweltfreundliche Ausgestaltung. Es werden vorteilhaft keine stoffschlüssigen Verbindungsmittel benötigt und sind demnach sehr umweltfreundlich.

In einer weiteren bevorzugten Ausführungsform ist die Stabvorrichtung aus bevorzugt 2 - 8 Stabeinzelelemente, stärker bevorzugt aus 3 - 6 Stabeinzelelemente und insbesondere aus 3 Stabeinzelelemente ausgestaltet. Es hat sich gezeigt, dass 3 Einzelstabelemente eine hervorragende Flexibilität und noch ausreichende Steifigkeit aufweisen, um die Mantelfläche um einen Baum zu stülpen.

Die oben beschriebenen Adapter sind bevorzugt aus Holz, Metall und/oder Kunststoff ausgestaltet. Es kann dabei im Sinne der Erfindung vorgesehen sein, dass die Stabeinzelelemente ein von den Adapter anderweitiges Material umfassen. Zum Beispiel können die Einzelelemente aus Kunststoff ausgestaltet sein, während die Adapter Metall umfassen.

In einer weiteren bevorzugten Ausführungsform ist das Hüllsystem dadurch gekennzeichnet, dass die Öffnung in der Grundfläche kreisförmig ausgestaltet ist und einen Durchmesser aufweist, welcher so groß ist, dass die Öffnung einen Baumstamm aufnehmen kann.

Es liegt in der Natur der Sache, dass ein Baumstamm im Querschnitt rund ist. Indem die Öffnung in der Grundfläche kreisförmig ausgestaltet ist, kann diese Öffnung dem Baumstamm vorteilhaft angepasst sein, sodass die Auffangen von Nadeln/Blättern und/oder Ästen durch die Grundfläche maximiert wird. Es liegt nämlich ein möglichst kleiner Freiraum zwischen Baumstamm und Grundfläche vor. Weiterhin ermöglicht die kreisförmige Öffnung eine gute Führung der Grundfläche entlang des Baumstammes. Dies ist besonders vorteilhaft in dem Falle, wenn die Grundfläche von einer auf dem Boden liegenden Position in eine weiter oben angeordnete Position geführt wird, um die Mantelfläche mit der Grundfläche zu verbinden. Auch für die Herstellung einer Grundfläche ist eine runde Öffnung von Vorteil, da sie mit standardisierten Werkzeugmaschinen eingebracht werden kann. Je nach Dicke des Baumstammes kann eine geeignete Öffnung vorgesehen sein.

Es versteht sich, dass die Grundfläche bevorzugt ausschließlich in einem unteren Bereich des Baumes vorliegt, da die Äste eines Baumes nicht hindurchgeführt werden können.

In einer weiteren bevorzugten Ausführungsform ist das Hüllsystem dadurch gekennzeichnet, dass die Öffnung der Grundfläche mit einer schließbaren manschettenartigen Umrandung besetzt ist, so dass diese sich um einen Baumstamm anlegen kann. Die manschettenartige Umrandung führt vorteilhafter Weise dazu, dass die Grundfläche eine enorm höhere Lebensdauer aufweist, weil das Material der Grundfläche keinen direkten Kontakt zum Baumstamm erlangt. Der Baumstamm, insbesondere der eines Nadelbaumes, weist Fortsätze, Unebenheiten, Kanten, Erhebungen und/oder kleine Verästelungen auf, welche die Grundfläche im Vorgang der Führung von einem Boden zu einer weiter oben gelegenen Position beanspruchen - zum Beispiel kann sich die Grundfläche darin verhaken, was zu einrissen führen kann. Gerade, weil das Material der Grundfläche besonders dünn ausgestaltet ist, führt die Manschette zu einer Stärkung der Randfläche.

Ferner führt die Manschette bevorzugt dazu, dass die Öffnung individuell auf einen Baumstamm angepasst/ eingestellt werden kann, indem die Manschette beispielsweise über einen Klettverschluss verstellbar ist.

In einer weiteren bevorzugten Ausführungsform ist das Hüllsystem dadurch gekennzeichnet, dass die Grundfläche einen Einschnitt aufweist, welcher ausgehend von der Öffnung im Zentrum der Grundfläche, bevorzugt radial, nach außen zu einem äußeren Rand bzw. der Stoßkante der Grundfläche ausgerichtet ist, und der Einschnitt Verbindungsmittel aufweist.

Der besondere Vorteil des Einschnitts ist der, dass die Grundfläche auch im Nachgang - wenn ein Baum in einer stehenden Position vorliegt - für die Verwendung zu einem Hüllsystem um einen Baumstamm geführt werden kann und als Aufsammelfläche bzw. Auffangfläche für herunterfallende Nadeln/Blätter und/oder Äste dient.

Im Sinne der Erfindung ist ein Einschnitt eine in das Material der Grundfläche eingeschnitten Stelle. Der Einschnitt wird bevorzugt mit aus dem Stand der Technik bekannten Schneidverfahren in das Material eingebracht. Bevorzugt ist der Einschnitt so ausgestaltet, dass er von der Öffnung im Zentrum geradlinig (auf direktem Weg) radial nach außen zum äußeren Rand bzw. der Stoßkante ausgebildet ist. Der geradlinige Einschnitt ist insbesondere von Vorteil für ein schnelles und simples Positionieren der Grundfläche um einen Baumstamm. In einer weiteren bevorzugten Variante kann der Einschnitt ausgehend von der Öffnung bspw. auch spiralförmig nach außen zu einem Rand bzw. Stoßkante eingebracht sein.

Vorzugsweise ist der Einschnitt mit einem Verbindungsmittel versehen, sodass der Einschnitt bevorzugt verschlossen werden kann. Besonders stark bevorzugt ist das Verbindungsmittel so ausgestaltet, dass die Grundfläche reversibel verschlossen und geöffnet werden kann. Zum einen verhindert der Verschluss einen Austritt von Nadeln durch die Grundfläche und zum anderen kann das Verbindungsmittel (bspw. ein Reißverschluss) der Grundfläche eine gewisse Steifigkeit verleihen, die es einfacher möglich macht, die Grundfläche von einer unteren auf dem Boden liegenden Position in eine höhere Position für Verbindung mit der Mantelfläche zu führen.

In einer weiteren bevorzugten Ausführungsform ist das Hüllsystem dadurch gekennzeichnet, dass die Grundfläche und die Mantelfläche ein textiles Gebilde und/oder ein homogenes folienartiges Gebilde umfassen, wobei das textile Gebilde bevorzugt Naturfasern und/oder synthetischen Fasern umfasst. Der Vorteil von textilen Gebilden ist das Aufweisen einer besonders großen Zugfestigkeit. Dies hat zur Folge, dass auch besonders große und schwere Bäume umhüllt werden können, wobei das Hüllsystem dazu geeignet ist, den Baum zu transportieren, ohne dass das Flächenelement (Grundfläche, Mantelfläche) Verschleißerscheinung bzw. Risserscheinungen aufweisen. Textile Gebilde können ferner auch einen besonderen Vorteil aufweisen, indem sie sehr umweltschonend produziert sowie auch recycelt werden können. Folienartige Gebilde zeichnen sich vorteilhaft durch ihre sehr dünne Ausgestaltung aus. Auch das Herstellen gestaltet sich vorteilhaft sehr wirtschaftlich, da die Industrie derartige Gebilde schon seit langem für unterschiedlichste Verwendungszwecke herstellt.

Sowohl mit synthetischen Fasern als auch mit Naturfasern gehen jeweils verschiedene Vorteile einher. Da synthetische Fasern künstlich hergestellt werden, können geforderte Parameter individuell bei der Produktion eingestellt werden. Weiterhin können synästhetische Fasern besonders gleichmäßig hergestellt werden, sodass sie in vorteilhafter Weise zu einem Hüllsystem verarbeitet werden können. Eine aufwändige Nachbearbeitung, um Eigenschaften anzupassen ist nicht notwendig. Naturfasern haben hingegen den enormen Vorteil, dass sie nachwachsend und biologisch abbaubar sind. Gerade im Hinblick auf die Umwelt und den Klimawandel ist eine ressourcenschonende und abfallschonende Produktion von Hüllsystemen von hoher Relevanz. Dabei können Naturfasern eine ähnlich starke Zugfestigkeit aufweisen wie synthetische Fasern.

In einer weiteren bevorzugten Ausführungsform ist das Hüllsystem in der Art ausgestaltet, dass die Mantelfläche aus einem Material ist, welches nicht identisch zu dem Material der Grundfläche ist. Das bedeutet, die Grundfläche kann zum Beispiel aus einem folienartigen Gebilde gefertigt sein, wohingegen die Mantelfläche aus einem textilen Gebilde gefertigt ist.

Die Mantelfläche erfährt eine höhere Last des Baumes während eines Transportvorgangs, daher ist sie bevorzugt aus einem Material mit einer hohen Zugfestigkeit, wie einem textilen Gebilde, ausgestaltet. Die Grundfläche trägt hingegen nicht das Gewicht des Baumes. Von dem her kann ein günstiges Material ohne eine aufweisende hohe Zugfestigkeit, nämlich zum Beispiel folienartige Gebilde, für die Verarbeitung einer Grundfläche verwendet werden. Es versteht sich, dass sowohl die Mantelfläche als auch die Grundfläche einen Mix aus folienartigen Gebilde und textilen Gebilde umfassen kann. Selbstverständlich kann sowohl die Grundfläche als auch die Mantelfläche besonders bevorzugt aus einem textilen Gebilde ausgestaltet sein.

In einer weiteren bevorzugten Ausführungsform ist das Hüllsystem dadurch gekennzeichnet, dass das Verbindungsmittel eine Knopfverbindung, ein Reißverschluss, ein Klettverschluss und/oder ein Schnürverschluss ist.

Insbesondere diese Verbindungsmittel zeigen vorteilhafte Eigenschaften in Bezug auf das reversible Lösen und Befestigen der Flächenelemente und/oder Einschnitte dieser auf. Sie sind in einfacher Form ohne Klebstoffe, sondern über Nähte anbringbar, sodass die vorgenannten Verbindungsmittel umweltfreundlich sind. Zudem muss keine hohe Kraft aufgewendet werden, die Flächenelemente und/oder Einschnitte über die Verbindungsmittel zu verschließen und/oder zu öffnen.

Knopfverbindungen weisen darüber hinaus eine vorteilhaft lange Lebensdauer und Haltbarkeit auf. Reißverschlüsse haben hingegen den Vorteil, dass sie mit einer Handbewegung eine große Fläche komplett verschließen. Der Verschluss ist dabei besonders dicht, sodass keine Nadeln, Blätter und/oder Äste die Verbindungsmittel durchdringt. Reißverschlüsse haben neben ihrer Verschlussfunktion auch noch den Vorteil, dass sie besonders dekorativ erscheinen. Klettverschlüsse sind dagegen vorteilhaft sehr einfach zu betätigen und auch für ungeübte Personen in schneller Weise zu öffnen und zu verschließen. Ferner weisen Klettverschlüsse aufgrund ihrer biegeweichen Ausgestaltung Vorteile beim Einrollen und Verpacken des Hüllsystems auf. Auch die Spannung der Flächen kann mit dem Klettverschluss vorteilhaft individuell eingestellt werden.

In einer weiteren bevorzugten Ausführungsform ist das Hüllsystem dadurch gekennzeichnet, dass die nach außen gerichtete Seite der Mantelfläche Trageeinrichtungen aufweist, wobei die Trageeinrichtungen bevorzugt als Führungslaschen und/oder -kanäle ausgestaltet sind, welche dazu eingerichtet sind, Traggurte aufzunehmen, wobei die Führungslaschen und/oder -kanäle bevorzugt parallel zum Einschnitt in der Mantelfläche ausgerichtet sind. Eine derartige Ausgestaltung des bevorzugten Hüllsystems ermöglicht vorteilhaft das Versetzen eines Baumes beispielsweise von einem Standort zu einem Entsorgungsort. Entgegen Ausführungen des Standes der Technik müssen aufgrund der Trageeinrichtungen keine nachteiligen Seilschlaufen um die gesamte Hülle angelegt werden, um von einer oder mehreren Personen getragen zu werden. Diese Seilschlaufen können in häufigen Fällen verrutschen, was durch die erfindungsgemäßen Trageeinrichtungen verhindert wird. Die Trageeinrichtungen sind so stabil, dass sie keine Schwachstelle im gesamten Hüllsystem darstellen und auch bei schweren Lasten nicht nachgeben. Bevorzugt umfasst eine Trageeinrichtung eine Lasche und/oder einen Kanal, der dazu konfiguriert ist, einen Tragegurt, ein Trageseil, ein Trageband, Trageschnur, Trageriemen, Trageleine und/oder Tragestrick aufzunehmen. Für einen Transport eines Baumes, der in einem bevorzugten Hüllsystem eingebettet ist, kann eine oder mehrere Personen jeweils einen Tragegurt verwenden, um den Baum zu tragen. Die Führungslaschen und/oder -kanäle sind insbesondere Parallelen zum Einschnitt in der Mantelfläche ausgestaltet. Dies ermöglicht vorteilhaft eine sehr gute Stabilität und Komfort beim Tragen des Baumes.

Auch wenn die Ausgestaltung der Trageeinrichtungen nicht zwingend erfordern, dass die Tragegurte eine Schlaufe um das Hüllsystem bilden, kann dies trotzdem im Sinne der Erfindung als eine alternative Möglichkeit dienen. Dies führt unter anderem dazu, dass die Gurte das Hüllsystem komprimieren, und den Baum in seinem Volumen reduzieren. Durch Volumenreduzierung vereinfacht sich das Tragen eines Baumes wesentlich und kann insbesondere durch Engstellen wie Türen in einfacher Weise hindurchgetragen werden.

In einer weiteren bevorzugten Ausführungsform ist das Hüllsystem dadurch gekennzeichnet, dass die nach außen gerichtete Seite der Mantelfläche Befestigungslaschen aufweist, welche dazu eingerichtet sind, eine aufgerollte Mantelfläche zu fixieren. Eines der besonderen Vorzüge der vorliegenden Erfindung ist auch darin zu sehen, dass sowohl die Mantelfläche als auch die Grundfläche eingerollt und mit sehr geringem Volumen verpackt werden kann. Für den Aufbau des bevorzugten Hüllsystems, insbesondere für das Überstülpen der Mantelfläche über den Wipfel eines Baumes bzw. der Baumkrone ist es von Vorteil, wenn die Mantelfläche nicht in ihrer Gesamtheit ausgebreitet ist, sondern teilweise oder mindestens in Teilbereichen aufgerollt ist. Damit eine Person die aufgerollten Teilbereiche nicht während des Aufbaus des Hüllsystems durchgehend mit der Hand fixieren muss, weist die bevorzugten Variante Befestigungslaschen als Fixierelemente auf. Die Befestigungslaschen können jede mögliche Verbindungsmöglichkeiten aufweisen, zum Beispiel ein Klettverschluss - System oder ein Haken/Öse- System.

In einer weiteren bevorzugten Ausführungsform der Erfindung ist das Hüllsystem dadurch gekennzeichnet, dass die nach außen gerichtete Seite der Mantelfläche zwei Führungskanäle aufweist, welche jeweils in einer Nähe einer distalen Seite der Mantelfläche platziert sind. Dies führt vorteilhaft dazu, dass ebenfalls die Stabvorrichtungen entlang (in der Nähe) des Einschnitts der Mantelfläche positioniert sind, wenn diese in die Führungskanäle eingebracht vorliegen. Durch die unmittelbare Nähe der Stabvorrichtungen neben dem Schließmechanismus (Einschnitt) ist ein Aufrollen der distalen Seiten der Mantelfläche bzw. das Verschließen dieser, nicht mehr erforderlich. In dieser bevorzugten Ausführungsform kann eine Person die beiden Stabvorrichtungen direkt greifen und den dazwischenliegenden Mantelstoff mit den Händen etwas zusammenraffen. So kann eine Person vorteilhaft direkt nach dem Einführen der Stabvorrichtungen in die Kanäle die Mantelhülle aufnehmen und entsprechend anwenden.

Die "Nähe der Führungskanäle zu einer distalen Seite" ist im Sinne der Erfindung so zu verstehen, dass die Führungskanäle bevorzugt im Wesentlichen parallel zum Einschnitt bzw. einer distalen Seite (entlang einer Mantellinie) ausgerichtet sind und einen bevorzugten Abstand von bevorzugt bis zu 10 cm, stärker bevorzugt bis zu 5 cm und insbesondere bis zu 3 cm zu dem Einschnitt bzw. der distalen Seite aufweisen. In einer weiteren bevorzugten Ausführungsform sind die Führungskanäle nicht exakt parallel zum Einschnitt bzw. einer distalen Seite (entlang einer Mantellinie) ausgerichtet, sondern so, dass sie einen kleinen Winkel - bevorzugt bis zu 5° - mit einer gedachten exakt parallel zum Einschnitt ausgerichtete Linie einschließen. Dies vereinfacht vorteilhaft die Öffnung und den Verschluss des Einschnittes über Verbindungsmittel.

In einer weiteren bevorzugten Ausführungsform betrifft die Erfindung ein Verfahren für den Aufbau eines Hüllsystems um einen Baum, wobei das Hüllsystem Stabvorrichtungen eine biegeschlaffe kreisförmige Grundfläche mit einem Einschnitt und eine biegeschlaffe Mantelfläche mit eingearbeiteten Führungskanäle sowie einem Einschnitt aufweist, umfassend die nachfolgenden Schritte:

a) Bereitstellen eines Baumes, umfassend einen Baumstamm und eine Baumspitze;

b) Umlegen der Grundfläche um den Baumstamm, indem der Einschnitt geöffnet wird und der Baumstamm durch diesen geführt wird, bis der Baumstamm von der im Zentrum der Grundfläche ausgestalteten Öffnung aufgenommen wird;

c) Auslegen der Mantelfläche auf einen Boden, wobei Mantelfläche in einer abgewickelten Form einen Kreissektor bildet und zwei distale Seiten aufweist;

d) Einführen der Stabvorrichtungen in die der Mantelfläche enthaltende Führungskanäle;

e) Aufrollen der distalen Seiten der Mantelfläche in Richtung der Führungskanäle und fixieren der aufgerollten distalen Seiten mit einem Verbindungsmittel;

f) Halten der Stabvorrichtungen mit den aufgerollten distalen Seiten am unteren Drittel Stabvorrichtungen durch eine Person und überstülpen der Mantelfläche über die Baumspitze;

g) Lösen der Verbindungsmittel und umlegen der distalen Seiten der Mantelfläche um den Baum und anschließend verschließen des durch die distalen Seiten gebildeten Einschnitts;

h) Verbinden der Grundfläche mit der Mantelfläche über Verbindungsmittel, sodass eine Stoßkante erhalten wird.

Die oben genannten Schritte ermöglichen ein Aufbauen eines bevorzugten Hüllsystems von einer einzelnen Person. Es versteht sich, dass das Verfahren nicht auf diese Reihenfolge der Schritte beschränkt ist. Weiterhin sind auch zusätzliche, ersetzende und/oder ergänzende Schritte für den Aufbau des bevorzugten Hüllsystems möglich. Das vorgenannte bevorzugte Verfahren ist vorteilhaft in sehr kurzer Zeit und in sehr simpler Weise durchzuführen. Weiterhin vorteilhaft ist der Aufbau bzw. das oben genannte Verfahren werkzeuglos ohne zusätzliche Gerätschaften durchzuführen.

In einer alternativen bevorzugten Ausführungsform kann auf die oben genannten Schritte e) und g) verzichtet werden. Diese alternative Ausführungsform ist nämlich dadurch gekennzeichnet, dass die Führungskanale unmittelbar in der Nähe der distalen Seiten platziert sind. Dies hat zur Folge, das auch die Stabvorrichtungen nach dem Einführen in die Führungskanäle dort vorliegen. Eine Person kann durch das Halten der Stabvorrichtungen demnach die gesamte Mantelfläche von Beiden distalen Seiten greifen und über einen Baum stülpen, wobei die Mantelfläche ausgehend von beiden Seiten durch die Stabvorrichtungen zusammengerafft werden kann.

Im vorliegenden Dokument ist der Begriff "Baumspitze" synonym für die Begriffe "Wipfel" sowie "Baumkrone" zu verstehen.

In einer weiteren bevorzugten Ausführungsform ist das Verfahren dadurch gekennzeichnet, dass der Baum eine Höhe von 1,2m- 3,0m, bevorzugt 1,5m - 2m und die Grundfläche einen Durchmesser von 1m - 1,7m, bevorzugt 1,3 - 1,5 m aufweist. Die Erfindung ist nicht auf diese Werte beschränkt. Die Fachwelt kann selbstverständlich die Größe des Durchmessers der Grundfläche der Höhe eines Baumes anpassen. Es versteht sich, dass die genannten Wertbereiche sämtliche rationalen Werte innerhalb der Bereiche umfassen. So kann beispielsweise der Baum auch eine Höhe von 1,25 m oder 1,789 m aufweisen, auch die Grundfläche kann zum Beispiel den Wert 1,42389 m annehmen.

In einer weiteren bevorzugten Ausführungsform betrifft die Erfindung eine Verwendung des Hüllsystems der eingangs genannten Art als Transporthilfe für einen Baum. Das Hüllsystem ist besonders gut für den Transport geeignet, da insbesondere die oben beschriebenen Vorteile in vollem Umfang wirken. Zum einen ist das Material sowie die konstruktive Ausgestaltung des Hüllsystems sehr stabil und zugfest, sodass ein hohes Gewicht des Baumes aufgenommen werden kann. Darüber hinaus können anhand von Trageeinrichtungen eine oder mindestens sehr wenige Personen schon den Baum von einer Standortposition zu einer Entsorgungsposition transportieren/bewegen, wobei das Anlegen des Hüllsystems durch eine einzelne Person in schneller Weise erfolgen kann. Ferner ermöglicht das Hüllsystem eine Volumenreduzierung des Baumes und ermöglicht einen Transport des Baums ohne dass Nadeln/ Blätter und/oder äste auf einen Boden fallen.

In einer weiteren bevorzugten Ausführungsform betrifft die Erfindung eine Verwendung des Hüllsystems der eingangs genannten Art als Schutz gegen Frost für einen Baum. Für die Erfinder war es überraschend, dass das erfindungsgemäße Hüllsystem auch in einem Außenbereich (außerhalb eines Hauses und/oder einer Wohnung) einen Baum umhüllen kann und damit einhergehend weitere Vorteile hervorgerufen werden. In diesem Anwendungsfall handelt es sich um Bäume, die nicht für den Transport geeignet sind, weil sie Wurzeln aufweisen und demnach noch Leben. Gerade Pflanzen und Bäume, die üblicherweise in wärmeren Klimagefilden aufzufinden sind und einen kalten Winter nicht überstehen, kann ein Hüllsystem davor schützen durch Frost und kalte Temperaturen Schäden anzunehmen.

Verwendung des Hüllsystems der eingangs genannten Art zu Dekorationszwecken eines Baums, wobei die Grundfläche als eine Unterlage dient und/oder über einen Baumständer, der den Baum aufnimmt, platziert wird und/oder die Mantelfläche an einem vom Baum separierten Ort verstaut wird. Entgegen Ausführungen aus dem Stand der Technik ist insbesondere das vorliegende Hüllsystem dazu eingerichtet, dass dieses auf einen dekorativen Zweck erfüllt. Insbesondere die Grundfläche erhält eine Ausgestaltung die dekorativen Zwecken gerecht wird. Häufig werden Weihnachtsbäume/Christbäume mit einer Decke als Unterlage dekoriert. Im Sinne der Erfindung kann auf diese "Dekorationsdecke" verzichtet werden, da die Grundfläche bevorzugt aus einem Material und einer Texturierung besteht, die dem Zwecke einer "Dekorationsdecke" gleichkommt. Bevorzugt kann demnach die Grundfläche eine von der Mantelfläche unterschiedliche Farbe aufweisen und bevorzugt verschiedene aufgedruckte und/oder eingestickte Texturen umfassen.

Das erfindungsgemäße Hüllsystem soll im Folgenden anhand von Beispielen näher erläutert werden, ohne auf diese Beispiele beschränkt zu sein.

## FIGUREN

Kurzbeschreibung der Abbildungen

Fig. 1    Darstellung eines bevorzugten Hüllsystems von einer Seitenansicht

Fig. 2    Darstellung eines bevorzugten Hüllsystems von einer Unterseite

Fig. 3    Darstellung einer bevorzugten Mantelfläche in einer abgewickelten Form

Fig. 4    Darstellung einer weiteren bevorzugten Mantelfläche in einer abgewickelten Form

Detaillierte Beschreibung der Abbildungen

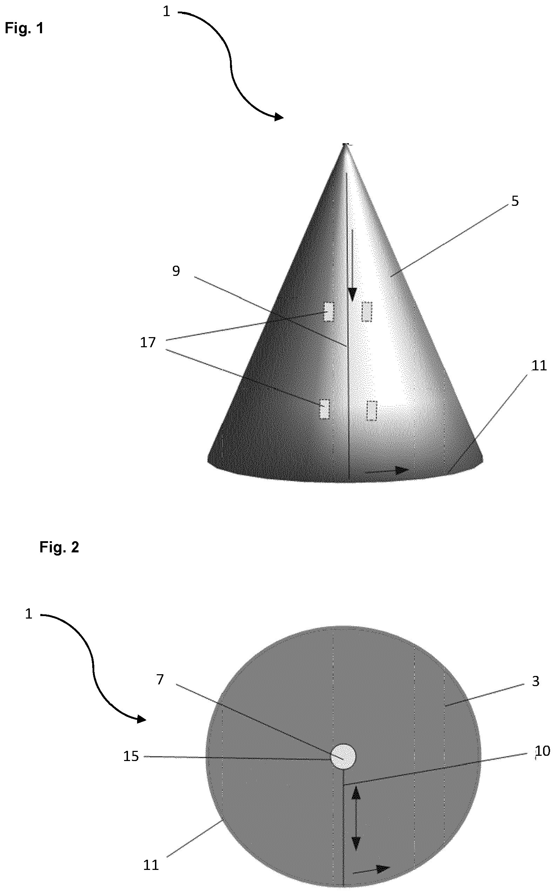

Fig. 1 ist eine Darstellung eines bevorzugten Hüllsystems 1 von einer Seitenansicht. Wie in obigen Ausführungen schon angegeben, handelt es sich dabei im Gegensatz zu allen bisher bekannten Systemen um ein aus zwei Flächenelementen ausgestaltetes System. Die Flächenelemente sind als Grundfläche 3 und als Mantelfläche 5 ausgestaltet. Diese lassen sich miteinander über eine Stoßkante 11 zu einem geschlossenen nadelundurchlässigen System verbinden. In der vorliegenden Darstellung der Fig. 1 ist die Grundfläche 3 durch die Mantelfläche 5 verdeckt.

Die Mantelfläche 5 weist dabei in einem aufgespannten Zustand eine Kegelform auf und ist bevorzugt mit der Grundfläche 3 reversibel verschließbar. Das Umhüllen eines (Teilbereiches eines) Baumes gestaltet sich bevorzugt wie folgt: Zunächst wird die Grundfläche **3** unterhalb des Baumes angeordnet und anschließend wird die Mantelfläche **5** um den Baum gestülpt/umgelegt/angelegt. Diese Reihenfolge wird bevorzugt angewendet, damit möglichst viele herabfallende Nadeln/ Blätter und/oder Äste beim Anlegen des Hüllsystems **1** um einen Baum auf der Grundfläche **3** aufkommen (und nicht auf einem Fußboden). Somit wird - aufgrund der glatten Oberfläche der Grundfläche **3**- ein einfaches Entfernen von Nadeln, Blätter und/oder Äste bspw. durch einen Handfeger ermöglicht oder aber die auf der Grundfläche **3** aufliegenden Nadeln, Blätter und/oder Äste werden mit in das Hüllsystem **1** eingebracht und mit dem Baum in einen Außenbereich (außerhalb eines Hauses oder einer Wohnung) transportiert.

Die Mantelfläche **5** hat eine verschließbare Öffnung - einen Einschnitt **9 -** an der Längsseite der Kegelhülle (Mantellinie) vom Kegelgrund bis kurz vor der Kegelspitze. Der Einschnitt 9 ist bevorzugt über ein Verbindungsmittel, wie zum Beispiel einen Reißverschluss zu öffnen und zu verschließen. Vorliegend in **Fig. 1** ist der Reißverschluss bevorzugt von oben nach unten zu verschließen.

Weiterhin weist die Mantelfläche **5** auf einer nach außen gerichteten Seite Laschen und/oder Kanäle **17** auf, die parallel zum Einschnitt **9** ausgerichtet sind. Die Laschen bzw. Kanäle **17** sind insbesondere dazu konfiguriert, Tragegurte in sich aufzunehmen. Die Tragegurte können beim Transport eines Baumes bevorzugt um die Schulter einer Person angelegt werden. Sie können aber auch dazu dienen, um das bevorzugte Hüllsystem **1** samt beinhalteten Baum gewickelt zu werden, damit sich das Volumen des Baumes reduziert. Dies ist insbesondere bei dem Transport durch Engstellen - wie Türen - von Vorteil.

Auch die als Stoßkante **11** ausgestaltete Verbindung zwischen Mantelfläche **5** und Grundfläche **3** ist über ein Verbindungsmittel reversibel zu lösen und zu verbinden.

Bevorzugt kann ein Reißverschluss zum Lösen beider Flächenelemente entgegen des Uhrzeigersinns aufgezogen werden.

**Fig. 2** zeigt ein bevorzugtes Hüllsystem **1** von einer Unterseite, wobei insbesondere die Grundfläche **3** zu sehen ist.

Die Grundfläche **3** ist in einer Kreisform ausgestaltet. Im Zentrum der Grundfläche **3** befindet sich eine Aussparung bzw. eine Öffnung **7**. Die Öffnung **7** ist im Durchmesser so groß, dass sie einen Baumstamm in sich aufnehmen kann. Ausgehend von der Öffnung **7** weist die Grundfläche **3** einen radial nach außen gerichteten Einschnitt **10** auf. Dabei ist der Rand der Aussparung bzw. Öffnung **7** bevorzugt mit einer schließbaren manschettenartigen Umrandung **15** besetzt, so dass diese sich um den Baumstamm anlegen kann, um ein Hindurchfallen von Nadeln durch die Öffnung **7** zu verhindern und darüber hinaus auch den Verschleiß der Grundfläche 3 (bspw. Einrisse) zu vermindern.

Die Grundfläche **3** kann bereits nach dem Aufstellen des Baumes unter diesem als Dekorationselement positioniert werden und auch gleichzeitig als Nadelfang dienen. Dabei wird die Grundfläche **3** bevorzugt durch den radialen Einschnitt **10** um den Baumstamm geführt und bevorzugt oberhalb eines Baumständers gelegt. Dadurch wird auch ein verwendeter Baumständer mit abgedeckt. Der radiale Einschnitt **10** kann anschließend bevorzugt mittels Reißverschluss, und/oder Klettverschluss, etc. verschlossen werden.

Bei einer Verwendung der Grundfläche **3** als ein Dekorationselement ist die Grundfläche **3** bevorzugt in Rot und/oder in einer weiteren Farbe ausgestaltet. Es kann auch bevorzugt sein, dass auf der Grundfläche **3** Weihnachtsmotive aufgedruckt sind. Des Weiteren bietet sich die Möglichkeit, dass an dem Außenrand der Grundfläche **3** ein farbiger girlandenartiger Rand und/oder LED-Elemente angebracht werden. So kann die Grundfläche **3** bereits während der Weihnachtszeit dauerhaft als Unterlage und Dekorationselement genutzt werden. Dabei bietet sie neben der Dekorationsfunktion ebenfalls Schutz des darunterliegenden Fußbodens und gleichzeitig einen Auffangschutz für die herabfallenden Nadeln.

In einer weiteren bevorzugten Alternative kann die Grundfläche **3** auch erst angelegt werden, wenn der Baum entsorgt werden soll, wobei die Grundfläche **3** bevorzugt (zeitlich) vor der Mantelfläche **5** angelegt wird.

Die Grundfläche **3** besitzt bevorzugt den gleichen Umfang, wie der untere Rand der kegelförmigen Mantelfläche **5.** Der Durchmesser der Grundfläche 3 beträgt bei Baumgrößen von 1,50 - 2,20m bevorzugt ca. 1,30-1,70m.

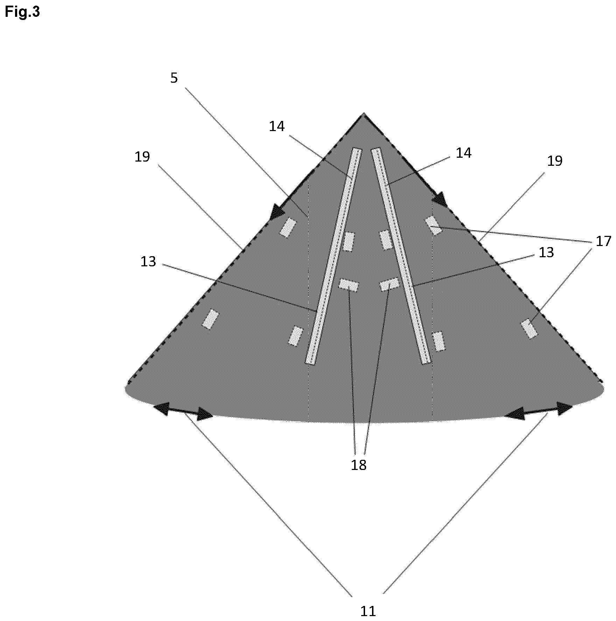

**Fig.3** illustriert die bevorzugte Mantelfläche **5** in einer abgewickelten Form. Die abgewickelte Form der Mantelfläche **5** stellt einen Kreissektor dar. Die Darstellung zeigt eine nach außen gerichtete Fläche der Mantelfläche **5**. Die Mantelfläche **5** weist dabei Führungskanäle **13** auf, die dazu eingerichtet sind, eine Stabvorrichtung **14** in sich aufzunehmen. Die Stabvorrichtung **14** stützt die Mantelfläche **5** und verleiht dieser bzw. dem gesamten Hüllsystem 1 eine benötigte Steifigkeit.

Die Mantelfläche **5** beinhaltet bevorzugt zwei integrierte Stabvorrichtungen **14**. Dabei werden die Stabvorrichtungen **14** vor dem Anlegen der Mantelfläche **5** an den Baum in vorhandenen Kanäle von einer Unterseite eingeführt. Die Kanäle **13** verlaufen vertikal entlang einer Mantellinie in Richtung einer Kegelspitze. Nachdem die Stabvorrichtungen **14** in die Kanäle **13** eingeführt worden sind, können diese z.B. durch eine Lasche verschlossen werden, die das Herausrutschen der Stabvorrichtungen **14** verhindert. Das Einführen der Stabvorrichtungen **14** erfolgt vorzugsweise, indem die Mantelfläche 5 auf dem Boden in die abgewickelte Form ausgelegt wird, wobei die Kanäle **13** auf der vom Boden abweisenden Fläche vorliegen.

Nachdem die Stabvorrichtungen **14** in die Kanäle **13** eingeführt und verschlossen worden sind, werden die jeweiligen distalen Kegellängsseiten **19** bis zum Stabkanal **13** aufgerollt und dort mit einem aufweisenden Fixierelement **18,** wie z.B. einem Klettverschluss fixiert.

Das Anlegen der Mantelfläche **5** um einen Baum erfolgt, indem beide Stabvorrichtungen **14** am unteren Drittel zusammen mit den jeweils aufgerollten distalen Kegellängsseiten **19** durch eine Person festgehalten werden. Anschließend wird die Mantelfläche **5** mit der Kegelspitze nach oben zeigend in eine Höhe bewegt. Darauf folgend wird die geschlossene Kegelspitze über die Baumspitze gestülpt. In einem nächsten Schritt wird zunächst einer der beiden Klettverschlüsse **18** geöffnet, welche die zusammengerollten distalen Kegellängsseiten **19** zusammenhalten. Eine erste distale Kegellängsseite **19** wird um den Baum gelegt, analog die zweite Kegellängsseite **19.**

Anschließend wird die Grundfläche **3** mit der Mantelfläche **5** an der Stoßkante **11** miteinander verbunden. Nachfolgend wird bevorzugt die Mantelfläche **5** über den Einschnitt **9** entlang einer Mantellinie längsseitig verschlossen. Somit entsteht vorteilhafterweise eine geschlossene nadelundurchlässige Transport-/Entsorgungshülle.

Für einen besseren Transport des Hüllsystems **1** inklusive Baum besteht die Möglichkeit mit bevorzugten vertikal angelegten Flachbandgurten den Baum bzw. die Hülle **1** zusammenzuziehen bzw. zu stauchen, um das Volumen zu verkleinern und gleichzeitig den Baum an den Gurten herauszutragen, ohne das Nadeln auf den Boden fallen.

Nach dem Heraustransportieren des Baumes kann das Hüllsystem **1** bevorzugt wieder gelöst werden, in dem bevorzugt zuerst die Grundfläche **3** von der Mantelfläche **5** getrennt wird. Anschließend wird die Mantelfläche **5** bevorzugt entlang der Mantellinie im Einschnitt 9 geöffnet und sowohl Grundfläche **3** als auch Mantelfläche **5** können verpackt werden und zu einem späteren Zeitpunkt (bspw. Weihnachten im nachfolgenden Jahr) wiederverwendet werden. Vor dem Verpacken werden bevorzugt die jeweiligen Stabvorrichtungen **14** aus den Kanälen **13** herausgenommen.

Die Berechnung der Längsseite s der Mantelfläche ergibt sich aus $s = \sqrt{r^2 + h^2}$ , wobei h die entsprechende Baumhöhe darstellt. Die (ausgeklappte) abgewickelte Kegelfläche ergibt sich aus der Seitenkantenlänge und dem Winkel der beiden abgehenden Seitenkanten. Der Winkel ergibt sich dabei aus

$$\alpha = 360° \times \frac{r}{s}$$
.

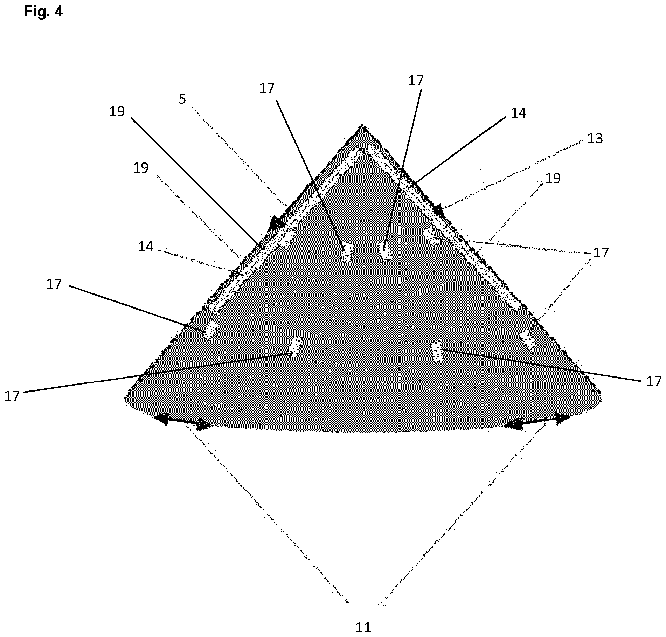

**Fig. 4** zeigt die bevorzugte Mantelfläche **5** in einer abgewickelten Form, insbesondere eine nach außen gerichtete Seite der Mantelfläche **5** (in Bezug auf die aufgespannte Kegelform). Die abgewickelte Form repräsentiert einen Kreissektor, wobei Kreisbogen der Mantelfläche **5** bevorzugt die Verbindungsstelle zur Grundfläche **3** darstellt und demnach als eine Stoßkante **11** ausgebildet ist. Die Mantelfläche **5** weist bevorzugt eine Vielzahl von Führungslaschen/- kanäle **17** für bevorzugt eine Vielzahl von Tragegurten auf. Weiterhin geht inhärent mit der Ausgestaltung der Mantelfläche **5** als Kreissektor das Aufweisen von zwei distale Seiten **19** einher.

Die in **Fig. 4** dargestellte Ausführungsform umfasst insbesondere zwei Führungskanäle **13** für Stabvorrichtungen **14.** Diese sind dabei bevorzugt so platziert, dass sie unmittelbar in der Nähe der distalen Seiten **19** vorliegen. Aus diesem Grunde liegen die Stabvorrichtungen **14** ebenfalls nach dem Einbringen in die Kanäle **13** dort vor und ermöglichen damit einer Person die gesamte Mantelfläche **5** ausgehend von beiden Seiten **19** zusammenzuraffen. Dies vereinfacht das Überstülpen des Hüllsystems **1** über einen Baum.

## BEZUGSZEICHENLISTE

| 1 | Hüllsystem |
| 3 | Grundfläche |
| 5 | Mantelfläche |
| 7 | Öffnung in der Grundfläche |
| 9 | Einschnitt der Mantelfläche |
| 10 | Einschnitt der Grundfläche |
| 11 | Stoßkante |
| 13 | Führungskanal |
| 14 | Stabvorrichtung |
| 15 | manschettenartige Umrandung |
| 17 | Führungslaschen/-kanal für Tragegurte |
| 18 | Fixierelemente |
| 19 | Distale Seiten |

## Patentansprüche

1. Hüllsystem (1) für einen Baum

   wobei das Hüllsystem (1) zwei lösbar miteinander verbundene biegeschlaffe Flächenelemente aufweist, wobei ein erstes Flächenelement als eine Grundfläche (3) und ein zweites Flächenelement als eine Mantelfläche (5) ausgestaltet ist, sodass beide Flächenelemente durch ihre Verbindung eine verschlossene Hülle herbei führen, welche in ihrem inneren einen Teilbereich eines Baumes aufnehmen kann, wobei die Grundfläche (3) eine Öffnung (7) aufweist, **dadurch gekennzeichnet, dass** die Mantelfläche (5) eine Stabvorrichtung (14) entlang einer Mantellinie aufweist.

2. Hüllsystem (1) nach Anspruch 1 **dadurch gekennzeichnet, dass** die Grundfläche (3) und die Mantelfläche (5) über ein Verbindungsmittel reversibel miteinander verbindbar sind und in der Verbindungsstelle eine Stoßkante (11) bilden und die Öffnung (7) im Zentrum der Grundfläche (3) positioniert ist.

3.  Hüllsystem (1) nach einem oder beiden der vorhergehenden Ansprüche
    **dadurch gekennzeichnet, dass**
    die verschlossene Hülle in einem aufgespannten Zustand die Form eines Kegels annimmt,

    - wobei die Grundfläche (3) eine Kreisform aufweist;
    - wobei die Mantelfläche (5) entlang einer Mantellinie einen Einschnitt (9) mit einem Verbindungsmittel aufweist, welcher dazu eingerichtet ist, die Mantelfläche (5) zu öffnen, sodass diese eine abgewickelte Form annehmen kann;
    - wobei die abgewickelte Form der Mantelfläche (5) einen Kreissektor bildet.

4.  Hüllsystem (1) nach einem oder beiden der vorhergehenden Ansprüche
    **dadurch gekennzeichnet, dass**
    die Stabvorrichtung (14) aus Holz, Metall und/oder Kunststoff gefertigt ist.

5.  Hüllsystem (1) nach einem oder mehreren der vorhergehenden Ansprüche
    **dadurch gekennzeichnet, dass**
    sowohl die Grundfläche (3) als auch die Mantelfläche (5) jeweils eine innenliegende in die verschlossene Hülle gerichtete Seite und eine nach außen gerichtete Seite aufweisen, wobei die nach außen und/oder die nach innen gerichtete Seite der Mantelfläche (5) entlang einer Mantellinie mindestens einen Führungskanal (13) aufweist, welcher dazu eingerichtet ist, eine Stabvorrichtung (14) aufzunehmen.

6.  Hüllsystem (1) nach einem oder mehreren der vorhergehenden Ansprüche
    **dadurch gekennzeichnet, dass**
    die Stabvorrichtung (14) mindestens zwei Stabeinzelelemente umfasst, die sich über einen Adapter miteinander reversibel verbinden lassen und/oder sich teleskopartig ineinander und/oder auseinander fügen lassen.

7.  Hüllsystem (1) nach einem oder mehreren der vorhergehenden Ansprüche
    **dadurch gekennzeichnet, dass**
    die Öffnung (7) in der Grundfläche (3) kreisförmig ausgestaltete ist und einen Durchmesser aufweist, welcher so groß ist, dass die Öffnung (7) einen Baumstamm aufnehmen kann.

8.  Hüllsystem (1) nach einem oder mehreren der vorhergehenden Ansprüche
    **dadurch gekennzeichnet, dass**

die Öffnung (7) der Grundfläche (3) mit einer schließbaren manschettenartigen Umrandung (15) besetzt ist, so dass diese sich um einen Baumstamm anlegen kann.

9.  Hüllsystem (1) nach einem oder mehreren der vorhergehenden Ansprüche
    **dadurch gekennzeichnet, dass**
    die Grundfläche (3) einen Einschnitt (10) aufweist, welcher ausgehend von der Öffnung (7) im Zentrum der Grundfläche (3), bevorzugt radial, nach außen zu einem äußeren Rand bzw. der Stoßkante (11) der Grundfläche (3) ausgerichtet ist, und der Einschnitt (10) Verbindungsmittel aufweist.

10. Hüllsystem (1) nach einem oder mehreren der vorhergehenden Ansprüche
    **dadurch gekennzeichnet, dass**
    die Grundfläche (3) und die Mantelfläche (5) ein textiles Gebilde und/oder ein homogenes folienartiges Gebilde umfassen, wobei das textile Gebilde bevorzugt Naturfasern und/oder synthetischen Fasern umfasst .

11. Hüllsystem nach einem oder mehreren der vorhergehenden Ansprüche 2, 3 und/oder 9
    **dadurch gekennzeichnet, dass**
    das Verbindungsmittel eine Knopfverbindung, ein Reißverschluss, ein Klettverschluss und/oder ein Schnürverschluss ist.

12. Hüllsystem (1) nach einem oder mehreren der vorhergehenden Ansprüche
    **dadurch gekennzeichnet, dass**
    die nach außen gerichtete Seite der Mantelfläche (5) Trageeinrichtungen aufweist, wobei die Trageeinrichtungen bevorzugt als Führungslaschen und/oder -kanäle (17) ausgestaltet sind, welche dazu eingerichtet sind, Traggurte aufzunehmen, wobei die Führungslaschen und/oder -kanäle (17) bevorzugt parallel zum Einschnitt (9) in der Mantelfläche (5) ausgerichtet sind.

13. Hüllsystem (1) nach Anspruch 5
    **dadurch gekennzeichnet, dass**
    die nach außen gerichtete Seite der Mantelfläche (5) zwei Führungskanäle (13) aufweist, welche jeweils in einer Nähe einer distalen Seite (19) der Mantelfläche (5) platziert sind und/oder die nach außen gerichtete Seite der Mantelfläche (5) Befestigungslaschen (18) aufweist, welche dazu eingerichtet sind, eine aufgerollte Mantelfläche (5) zu fixieren.

14. Verwendung des Hüllsystems (1) nach einem oder mehreren der vorhergehenden Ansprüche 1 - 13 als Transporthilfe für einen Baum.

15. Verwendung des Hüllsystems (1) nach einem oder mehreren der vorhergehenden Ansprüche 1 - 13 als Schutz gegen Frost für einen Baum.

**Claims**

1. **Enclosure system (1) for a tree,**

   wherein the enclosure system (1) comprises two flexibly bendable surface elements that are detachably connected to each other, wherein a first surface element is designed as a base surface (3) and a second surface element is designed as a lateral surface (5), so that both surface elements together form a closed enclosure that can accommodate a section of a tree in its interior, wherein the base surface (3) has an opening (7), **characterized in that**
   the lateral surface (5) includes a supporting rod (14) along a mantle line.

2. **Enclosure system (1) according to Claim 1, characterized in that**
   the base surface (3) and the lateral surface (5) are reversibly connectable via a fastening element, forming a seam edge (11) at the connection point, and that the opening (7) is positioned at the center of the base surface (3).

3. **Enclosure system (1) according to one or both of the preceding claims, characterized in that**
   the closed enclosure assumes a conical shape when expanded,

   • wherein the base surface (3) has a circular shape;
   • wherein the lateral surface (5) has a cut (9) along a mantle line with a fastening element, which is configured to open the lateral surface (5) so that it can assume an unrolled form;
   • wherein the unrolled form of the lateral surface (5) forms a circular sector.

4. **Enclosure system (1) according to one or both of the preceding claims, characterized in that**
   the supporting rod (14) is made of wood, metal, and/or plastic.

5. **Enclosure system (1) according to one or more of the preceding claims, characterized in that**
   both the base surface (3) and the lateral surface (5) each have an inward-facing side directed toward the closed enclosure and an outward-facing side, wherein the outward-facing and/or inward-facing side of the lateral surface (5) has at least one guiding channel (13) along a mantle line, which is configured to accommodate a supporting rod (14).

6. **Enclosure system (1) according to one or more of the preceding claims, characterized in that**
   the supporting rod (14) comprises at least two rod segments that can be reversibly connected via an adapter and/or can be telescopically inserted into or extended from one another.

7. **Enclosure system (1) according to one or more of the preceding claims, characterized in that**
   the opening (7) in the base surface (3) is circular in shape and has a diameter large enough to accommodate a tree trunk.

8. **Enclosure system (1) according to one or more of the preceding claims, characterized in that**
   the opening (7) of the base surface (3) is fitted with a closable cuff-like edging (15), allowing it to wrap around a tree trunk.

9. **Enclosure system (1) according to one or more of the preceding claims, characterized in that**
   the base surface (3) has a cut (10) that extends from the opening (7) at the center of the base surface (3), preferably radially, outward to the outer edge or seam edge (11) of the base surface (3), and that the cut (10) is equipped with fastening elements.

10. **Enclosure system (1) according to one or more of the preceding claims, characterized in that**
    the base surface (3) and the lateral surface (5) consist of a textile structure and/or a homogeneous film-like structure, wherein the textile structure preferably comprises natural fibers and/or synthetic fibers.

11. **Enclosure system according to one or more of the preceding claims 2, 3, and/or 9, characterized in that**
    the fastening element is a button connection, a zipper, a hook-and-loop fastener, and/or a lace fastener.

12. **Enclosure system (1) according to one or more of the preceding claims, characterized in that**
    the outward-facing side of the lateral surface (5) has carrying elements, wherein the carrying elements are preferably designed as guiding loops and/or channels (17) configured to accommodate carrying straps, with the guiding loops and/or channels (17) preferably aligned parallel to the cut (9) in the lateral surface (5).

**13.** Enclosure system (1) according to Claim 5, **characterized in that** the outward-facing side of the lateral surface (5) has two guiding channels (13), each positioned near a distal edge (19) of the lateral surface (5), and/or the outward-facing side of the lateral surface (5) has securing loops (18) designed to fix the rolled-up lateral surface (5).

**14.** Use of the enclosure system (1) according to one or more of the preceding Claims 1 - 13 as a transport aid for a tree.

**15.** Use of the enclosure system (1) according to one or more of the preceding Claims 1 - 13 as frost protection for a tree.


**Revendications**

**1.** Système d'enveloppe (1) pour un arbre **caractérisé en ce que** le système d'enveloppe (1) comprend deux éléments de surface flexibles, réversiblement connectés l'un à l'autre, un premier élément de surface constituant une surface de base (3) et un second élément de surface constituant une surface latérale (5), de sorte que les deux éléments de surface, par leur connexion, forment une enveloppe fermée pouvant contenir une partie d'un arbre en son intérieur, la surface de base (3) comportant une ouverture (7),
**caractérisé en ce que**
la surface latérale (5) comprend un dispositif de renfort (14) disposé le long d'une ligne de génératrice.

**2.** Système d'enveloppe (1) selon la revendication 1, **caractérisé en ce que**
la surface de base (3) et la surface latérale (5) sont réversiblement connectables via un moyen de connexion et forment une arête de jonction (11) à l'endroit de leur connexion, l'ouverture (7) étant positionnée au centre de la surface de base (3).

**3.** Système d'enveloppe (1) selon l'une ou les deux revendications précédentes,
**caractérisé en ce que**
l'enveloppe fermée adopte la forme d'un cône en état d'extension,

• la surface de base (3) ayant une forme circulaire,
• la surface latérale (5) comportant une entaille (9) le long d'une ligne de génératrice avec un moyen de connexion permettant d'ouvrir la surface latérale (5), afin qu'elle prenne une forme déployée,
• la forme déployée de la surface latérale (5) constituant un secteur circulaire.

**4.** Système d'enveloppe (1) selon l'une ou les deux revendications précédentes,
**caractérisé en ce que**
le dispositif de renfort (14) est fabriqué en bois, en métal et/ou en plastique.

**5.** Système d'enveloppe (1) selon une ou plusieurs des revendications précédentes,
**caractérisé en ce que**
la surface de base (3) ainsi que la surface latérale (5) possèdent chacune une face interne orientée vers l'intérieur de l'enveloppe fermée et une face externe orientée vers l'extérieur, la face externe et/ou interne de la surface latérale (5) comportant au moins un canal de guidage (13) le long d'une ligne de génératrice, conçu pour recevoir un dispositif de renfort (14).

**6.** Système d'enveloppe (1) selon une ou plusieurs des revendications précédentes,
**caractérisé en ce que**
le dispositif de tige (14) comprend au moins deux éléments de tige individuels qui peuvent être réversiblement assemblés à l'aide d'un adaptateur et/ou qui peuvent être ajustés par un mécanisme télescopique en s'imbriquant ou en s'étendant.

**7.** Système d'enveloppe (1) selon une ou plusieurs des revendications précédentes,
**caractérisé en ce que**
l'ouverture (7) dans la surface de base (3) est conçue sous une forme circulaire et possède un diamètre suffisant pour accueillir un tronc d'arbre.

**8.** Système d'enveloppe (1) selon une ou plusieurs des revendications précédentes,
**caractérisé en ce que**
l'ouverture (7) de la surface de base (3) est entourée d'une bordure en forme de manchette (15) ajustable, permettant de s'adapter au tronc de l'arbre.

**9.** Système d'enveloppe (1) selon une ou plusieurs des revendications précédentes,
**caractérisé en ce que**
la surface de base (3) comporte une incision (10) partant de l'ouverture (7) au centre de la surface de base (3), préférentiellement de manière radiale, en direction du bord extérieur ou du bord de jonction (11) de la surface de base (3), ladite incision (10) étant dotée d'un moyen de fixation.

**10.** Système d'enveloppe (1) selon une ou plusieurs des revendications précédentes,
**caractérisé en ce que**
la surface de base (3) et la surface latérale (5) comprennent une structure textile et/ou une structure homogène de type film, la structure textile comprenant de préférence des fibres naturelles et/ou synthétiques.

11. Système d'enveloppe selon une ou plusieurs des revendications 2, 3 et/ou 9,
**caractérisé en ce que**
le moyen de fixation est une fixation par boutons, une fermeture éclair, une fermeture à scratch et/ou un système de laçage.

12. Système d'enveloppe (1) selon une ou plusieurs des revendications précédentes,
**caractérisé en ce que**
la face extérieure de la surface latérale (5) comprend des dispositifs de portage, lesdits dispositifs de portage étant de préférence conçus sous forme de boucles de guidage et/ou de canaux (17) prévus pour accueillir des sangles de transport, les boucles de guidage et/ou les canaux (17) étant préférentiellement alignés parallèlement à l'incision (9) dans la surface latérale (5).

13. Système d'enveloppe (1) selon la revendication 5
**caractérisé en ce que**

   la face extérieure de la surface de revêtement (5) présente deux canaux de guidage (13), lesquels sont chacun placés à proximité d'un côté distal (19) de la surface de revêtement (5) et/ou la face extérieure de la système d'enveloppe (5) présente des languettes de fixation (18), lesquelles sont configurées p
   our fixer une surface de revêtement (5) enroulée.

14. Utilisation du système d'enveloppe (1) selon une ou plusieurs des revendications précédentes 1 à 13 en tant qu'aide au transport d'un arbre.

15. Utilisation du système d'enveloppe (1) selon une ou plusieurs des revendications précédentes 1 à 13 en tant que protection contre le gel pour un arbre.

**Fig. 1**

1

5

9

17

11

**Fig. 2**

1

7

3

15

10

11

**Fig.3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2282587 A
- US 4054166 A
- US 2911025 A
- DE 29717614 U1